# EUROPÄISCHE PATENTANMELDUNG

(11) **EP 1 262 227 A2**
(43) Veröffentlichungstag der Anmeldung: **04.12.2002**
(21) Anmeldenummer: 02007982.8
(22) Anmeldetag: 10.04.2002
(51) Int. Cl.: B01F 17/00, C08F 2/24

(54) **Emulgatorgemisch für die Emulsionspolymerisation**

(30) Priorität: 29.05.2001 DE 10126266
(71) Anmelder: BASF AKTIENGESELLSCHAFT, 67056 Ludwigshafen (DE)
(72) Erfinder: Wulff, Dirk, Dr., 67105 Schifferstadt (DE); Auchter, Gerhard, Dr., 67098 Bad Dürkheim (DE)

(57) **Zusammenfassung**

Emulgatorgemisch, enthaltend einen Emulgator I der Formel 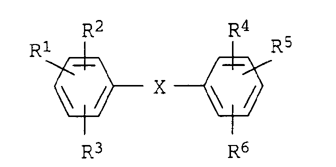 worin X für O, S, CH₂, NH oder NR⁷, ein oder zwei der Reste R¹ bis R⁶ für eine Gruppe SO₃^{⊖} K^{⊕} und die übrigen Reste R¹ bis R⁶ für H oder eine C₁-C₁₈-Alkylgruppe, R⁷ für eine C₁-C₁₈-Alkylgruppe und K für eine Gegenkation stehen
einen Emulgator II der Formel

R⁸-O- (Z-O)ₙ-SO₃ ^{⊖}K^{⊕}

worin die Variablen folgende Bedeutung haben:
- R⁸:: C₁-C₁₈-Alkyl
Z: CH₂―CH₂ oder 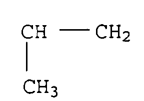
- n:: eine ganze Zahl von 1 bis 50
- K:: ein Kation
und einen nichtionischen Emulgator III.

## Beschreibung

Die Erfindung betrifft ein Emulgatorgemisch, enthaltend einen Emulgator der Formel 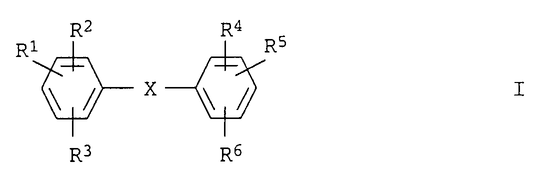 worin X für O, S, CH₂, NH oder NR⁷, ein oder zwei der Reste R¹ bis R⁶ für eine Gruppe SO₃^{⊖} K^{⊕} und die übrigen Reste R¹ bis R⁶ für H oder eine C₁-C₁₈-Alkylgruppe, R⁷ für eine C₁-C₁₈-Alkylgruppe und K für eine Gegenkation stehen
einen Emulgator II der Formel

R⁸-O-(Z-O)ₙ-SO₃^{⊖}K^{⊕}

worin die Variablen folgende Bedeutung haben:
R⁸: C₁-C₁₈-Alkyl
Z: CH₂ ― CH₂ oder 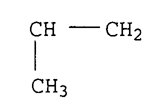
n: eine ganze Zahl von 1 bis 50
K: ein Kation
und einen nichtionischen Emulgator III.

Weiterhin betrifft die Erfindung wäßrige Polymerdispersionen, welche dieses Emulgatorgemisch enthalten und die Verwendung dieser Polymerdispersionen als Haftklebstoffe.

Bei der Emulsionspolymerisation werden Monomertröpfchen in Wasser mit Hilfe eines Emulgators emulgiert. Art und Menge des Emulgators bestimmen entscheidend die Stabilität der Monomertröpfchen und nach der Polymerisation die Stabilität der enthaltenen Polymerteilchen. Gewünscht ist naturgemäß, eine ausreichende Stabilisierung mit möglichst geringer Emulgatormenge zu erreichen.

Bei der späteren Verwendung, z.B. zur Beschichtung Substraten, verbleibt der Emulgator nach Entfernung des Dispersionswassers im Endprodukt. Auch die anwendungstechnischen Eigenschaften werden daher vom Emulgator beeinflußt.

Für viele Anwendungen ist ein hoher innerer Zusammenhalt (Kohäsion) gewünscht. Bisher bekannte Emulgatoren vermindern vielfach den inneren Zusammenhalt z.B. in einer Beschichtungsmasse oder einem Klebstoff.

Bei einem Klebstoff ist zusätzlich eine ausreichende Adhäsionskraft bzw. Klebrigkeit gewünscht. Von besonderer Bedeutung ist daher, daß ein Klebstoff sowohl eine hohe Kohäsion als auch eine hohe Adhäsion aufweist.

Aus DE 19818393 sind binäre Emulgatorgemische für die Emulsionspolymerisation und die Verwendung der Polymerisate als Klebstoff bekannt.

Die gewünschten Anforderungen bezüglich Stabilität der Monomertröpfchen und der erhaltenen Polymere sowie der anwendungstechnischen Eigenschaften als Klebstoff, insbesondere Haftklebstoff werden noch nicht in einem ausgewogenen Verhältnis erfüllt.

Entsprechendes gilt für die in DE 19705753 beschriebenen binären Emulgatorgemische.

Aufgabe der vorliegenden Erfindung waren daher Emulgatorsysteme, welche eine hohe Stabilität von wäßrigen Polymerdispersionen bewirken und bei der späteren Verwendung der wäßrigen Polymerdispersionen den inneren Zusammenhalt in der Beschichtungsmasse erhöhen oder zumindest nicht herabsetzen. Insbesondere sollen die Polymerdispersionen gut für Haftklebstoffe geeignet sein.

Demgemäß wurde die eingangs definierte Emulgatormischung und wäßrige Polymerdispersionen, welche diese Emulgatormischung enthalten, gefunden.

Das erfindungsgemäße Emulgatorgemisch enthält einen Emulgator I der Formel 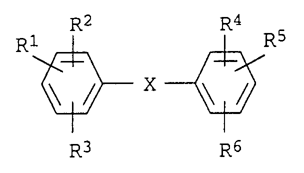 wobei X für 0, S, CH₂, NH oder NR⁷, ein oder zwei der Reste R¹ bis R⁶ für eine Gruppe SO₃^{⊖} K^{⊕} und die übrigen R¹ bis R⁶ für H oder eine C₁-C₁₈ Alkylgruppe, R⁷ für eine C₁-C₈ Alkylgruppe und K für eine Gegenkation stehen.

Vorzugsweise steht X für O. Vorzugsweise stehen ein oder zwei der Reste R¹ bis R⁶ für eine C₁ - C₁₈ Alkylgruppe, insbesondere für eine C₆-C₁₈ Alkylgruppe und die übrigen Reste R¹ - R⁶ für H-Atome und die Sulfonatgruppen.

Bei K handelt es sich um ein Gegenkation; vorzugsweise ausgewählt aus den Kationen von H, den Alkalimetallen, Ammonium. Besonders bevorzugt ist Natrium. Bei Verbindungen der Formel I handelt es sich üblicherweise auch um ein Gemisch von Verbindungen mit unterschiedlichen Substitutionsgrad (mono- oder dialkyliert) und unterschiedlichen Substitutionsposition der Substituierten (d.h. der Sulfonatgruppen und der ein oder zwei Alkylgruppen). Verbindungen mit der Formel I werden unter den Warenzeichen Dowfax® 2A von Dow Chemical Company vertrieben.

Das erfindungsgemäße Emulgatorgemisch enthält weiterhin einen Emulgator II der Formel

R⁸-O-(Z-O)ₙ - SO⁻₃ k⁺ II

wobei die Variablen folgende Bedeutung haben:
R^{8:} C₁-C₁₈ Alkyl, vorzugsweise C₆-C₁₄ Alkyl
Z: CH₂―CH₂ oder 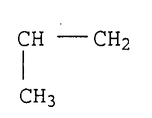
n: eine ganz Zahl von 1 bis 50, vorzugsweise von 5 bis 40
K⁺: ein Kation, z.B. H⁺, ein Alkalikation von Na, K oder Ammonium
Unter Verbindungen der Formel II sollen auch Verbindungen verstanden werden, in denen Z beide obengenannte Bedeutungen haben kann. Es handelt sich daher um Verbindungen mit Ethylenoxidgruppen, Propylenoxidgruppen oder mit Ethylen- und Propylenoxidgruppen.

Verbindungen der Formel II werden unter der Bezeichnung Disponil® FES 77 von Henkel vertrieben.

Das erfindungsgemäße Emulgatorgemisch enthält weiterhin einen Emulgator III. Hierbei handelt es sich um einen nichtionischen Emulgator. Die emulgierend wirkende Molekülgruppe ist daher keine in Wasser in Ionen dissoziierende Gruppe. Bevorzugt handelt es sich bei der emulgierend wirkenden Gruppe in Emulgator III um eine Alkoxygruppe, insbesondere eine C₁-C₄ Alkoxygruppe, z. B. eine Ethoxy- oder Propoxygruppe. Beim Emulgator III handelt es sich bevorzugt um eine niedermolekulare Verbindung mit einem Molgewicht kleiner 1500 g/mol, insbesondere kleiner 1000 g/mol.

Bevorzugt enthält der Emulgator III keine aromatischen Gruppen.

Bevorzugt besteht der Emulgator zu mindestens 20 Gew.-%, besonders bevorzugt zu mindestens 40 Gew.-% aus Alkoxygruppen (-Alkylen-O).

Besonders bevorzugt handelt es sich bei dem Emulgator III um einen solchen der Formel

R⁸-O-(Z-O)ₙ-H

in der R⁸, Z und n die obige Bedeutung und auch obige bevorzugte Bedeutungen haben.

Im Falle des Emulgator III steht
- R⁸: besonders bevorzugt für C₁₀H₂₁ bis C₁₅H₃₁, insbesondere für C₁₃H₂₇
- Z: besonders bevorzugt für CH₂-CH₂
- n: besonders bevorzugt für C₆-C₁₂, insbesondere C₈-Alkyl.

Emulgatoren III sind z. B. unter dem Namen Lutensol® von BASF erhältlich.

Das Emulgatorgemisch enthält vorzugsweise mindestens 5 Gew.-% besonders bevorzugt mindestens 10 Gew.-% jedes der Emulgatoren, insbesondere mindestens 10 Gew.-% der Emulgatoren I und II und mindestens 20 Gew.-% des Emulgators III, bezogen auf die Gewichtssumme der Emulgatoren I + II + III.

Das Emulgatorgemisch besteht vorzugsweise aus 5 bis 90 Gew.-%, insbesondere 5 bis 75 Gew.-% des Emulgators I, 5 bis 90 Gew.-% insbesondere 5 bis 75 Gew.-% des Emulgators II und 5 bis 90 Gew.-%, insbesondere 20 bis 90 Gew.-% des Emulgators III.

Die Gewichtsangaben sind auf das Emulgatorgemisch bezogen.

Das erfindungsgemäße Emulgatorgemisch wird vorzugsweise als Emulgator bei der Emulsionspolymerisation verwendet.

Der Emulgator bzw. das Emulgatorgemisch wird üblicherweise in Mengen von 0,1 bis 15 Gew.-%, vorzugsweise von 0,2 bis 5,0, besonders bevorzugt von 0,5 bis 2,5 Gew.-%, bezogen auf die zu polymerisierenden Monomeren verwendet. Die erhaltene Polymerdispersion enthält demgemäß die genannten Emulgatormengen. Es können auch noch weitere Emulgatoren mitverwendet werden, sie können bei der Emulsionspolymerisation eingesetzt werden oder nachträglich zugemischt werden. Eine Emulgatorgesamtmenge von 15 Gew.-%, insbesondere 10 Gew.-%, vorzugsweise 5 Gew.-%, bezogen auf die Monomeren, wird im allgemeinen nicht überschritten. Die Mitverwendung von weiteren Emulgatoren ist jedoch nicht notwendig. Bevorzugt wird daher allein das erfindungsgemäße Emulgatorgemisch verwendet.

Das erhaltene Polymer ist vorzugsweise aus folgenden radikalisch polymerisierbaren Verbindungen (Monomere) aufgebaut:
a) 40 bis 100 Gew.-% eines sogenannten Hauptmonomeren, ausgewählt aus C₁-C₂₀-Alkyl(meth)acrylaten, Vinylester von bis zu 20 C-Atome enthaltenden Carbonsäuren, Vinylaromaten mit bis zu 20 C-Atomen, ethylenisch ungesättigten Nitrilen, Vinylhalogeniden, Vinylethern oder Allylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.
b) 0 bis 20 Gew.-% einer ethylenisch ungesättigten Säure, eines ethylenisch ungesättigten Säureanhydrids oder Säureamids und
c) 0 bis 40 Gew.-% einer weiteren ethylenisch ungesättigten Verbindung.

Die Gewichtsangaben sind auf das Polymer bezogen.

Besonders bevorzugt enthält das Polymer 60 bis 100 Gew.-%, insbesondere 80 bis 100 Gew.-% Monomere a) 0 bis 10 Gew.-%, insbesondere 0 bis 5 Gew.-% Monomere b) und 0 bis 30 Gew.-%, insbesondere 0 bis 15 Gew.-% Monomere c).

Als Hauptmonomere zu nennen sind z.B. (Meth)acrylsäurealkylester mit einem C₁-C₁₀-Alkylrest, wie Methylmethacrylat, Methylacrylat, n-Butylacrylat, Ethylacrylat, 2-Ethylhexylacrylat, n-Butylmethacrylat und iso-Butylmethacrylat.

Insbesondere sind auch Mischungen der (Meth)acrylsäurealkylester geeignet.

Vinylester von Carbonsäuren mit 1 bis 20 C-Atomen sind z.B. Vinyllauraet, -stearat, Vinylpropionat, Versaticsäurevinylester und Vinylacetat.

Als vinylaromatische Verbindungen kommen Vinyltoluol α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren und mit einer Doppelbindung z.B. Ethylen genannt.

Vorzugsweise handelt es sich bei Hauptmonomeren a) um folgende Monomere oder ein Gemisch folgender Monomere: Styrol, C₁-C₁₀-Alkyl(meth)acrylate, insbesondere n-Butylacrylat und (Meth)acrylnitril, insbesondere Acrylnitril.

Es ist ein Vorteil der Erfindung, daß die Mitverwendung von Vinylestern nicht notwendig ist. Vinylester tragen zur Stabilisierung der Monomertröpfchen bei der Emulsionspolymerisation bei.

Auf diese stabilisierende Wirkung kann beim erfindungsgemäßen Emulgatorgemisch verzichtet werden.

Bevorzugte Monomere b) sind ethylenisch ungesättigte Säuren, z.B. Sulfonsäuren oder insbesondere Carbonsäuren. Genannt seien: (Meth)acrylsäure oder Itaconsäure, Dicarbonsäuren und deren Anhydride oder Halbester, z.B. Maleinsäure, Fumarsäure und Maleinsäureanhydrid, Acrylamidopropansulfonsäure, Vinylsulfonsäure, Sulfoethyl- bzw. Sulfopropyl(meth)acrylat bzw. deren Salze, insbesondere Ammonium- oder Alkalisalze und (Meth)acrylamid, N-Vinylpyrrolidon, N-Vinylcaprolactam, N-Vinyl-imidazol.

Als weitere Monomere c) seien z.B. Glycidylacrylat, Glycidylmethacrylat, Diallyldimethylammoniumchlorid und insbesondere Hydroxylgruppen enthaltende Monomere, z.B. C₁-C₁₅ Hydroxyalkyl(meth)acrylate genannt.

Bei der Emulsionspolymerisation werden insbesondere Wasserlösliche Initiatoren z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid, verwendet.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II) sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßrigen Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Weiterhin können bei der Polymerisation auch Regler eingesetzt werden, durch die die Molmasse verringert wird. Geeignet sind z.B. Verbindungen mit einer Thiolgruppe wie tert.-Butylmercaptan, Thioglykolsäureethylacrylester, Mercaptoethanol, Mercaptopropyltrimethoxysilan oder tert.-Dodecylmercaptan. Der Anteil dieser Regler kann insbesondere 0 bis 0,3 Gew.-%, bevorzugt 0,02 bis 0,3 Gew.-% bezogen auf das Polymerisat, betragen.

Die Emulsionspolymerisation erfolgt in der Regel bei 30 bis 95, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung der ersten und auch weiteren Teilchengenerationen kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Die erhaltene Polymerdispersion ist stabil. Koagulat ist nur in geringen Mengen vorhanden.

Bei der Verwendung der Polymerdispersion z.B. als Bindemittel werden gute anwendungstechnische Eigenschaften, insbesondere ein hoher innerer Zusammenhalt (Kohäsion) festgestellt. Die Polymerdispersion kann als Bindemittel in Beschichtungsmitteln, Imprägnierungsmitteln oder Klebstoffen Verwendung finden. Der wäßrigen Dispersionen können für die jeweilige Verwendung Zusatzstoffe, z.B. Pigmente, Füllstoffe, Verlaufsmittel, Entschäumer, Verdicker etc. zugesetzt werden.

Insbesondere eignen sich die erhaltenen Polymere bzw. Polymerdispersionen als Klebstoffe, besonders bevorzugt als Haftklebstoffe.

Die wäßrigen Polymerdispersionen können dazu ohne weitere Zusatzstoffe Verwendung finden.

Bei der Verwendung als Haftklebstoff kann den Polymeren bzw. den wäßrigen Dispersionen der Polymeren ein Tackifier, d.h. ein klebrigmachendes Harz zugesetzt werden. Tackifier sind z.B. aus Adhesive Age, Juli 1987, Seite 19-23 oder Polym. Mater. Sci. Eng. 61 (1989), Seite 588-592 bekannt.

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher Weise den erfindungsgemäßen Polymerisaten, bevorzugt den wäßrigen Dispersionen der Polymerisate zugesetzt werden. Vorzugsweise liegen die Tackifier dabei selber in Form einer wäßrigen Dispersion vor.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymerisat. (fest/fest).

Neben Tackifiern können z.B. noch weitere Additive z.B. Verdikkungsmittel, vorzugsweise Assoziativverdicker, Entschäumer, Weichmacher, Pigmente, Netzmittel oder Füllstoffe bei der Verwendung als Haftklebstoff Verwendung finden. Die erfindungsgemäßen Haftklebstoffe enthalten daher neben der wäßrigen Polymerdispersion gegebenenfalls noch Tackifier und/oder die vorstehenden Additive.

Die Haftklebstoffe eignen sich zur Herstellung selbstklebender Artikel wie Etiketten, Folien oder Klebebänder. Der Haftklebstoff kann durch übliche Methoden, z.B. durch Rollen, Rakeln, Streichen etc. auf Substrate, z.B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden. Das Wasser kann bevorzugt durch Trocknung bei 50 bis 150°C entfernt werden. Die Substrate können vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z.B. mit einem silikonisierten Papier, abgedeckt werden.

Die erfindungsgemäßen selbstklebenden Artikel haben sehr gute Klebeeigenschaften, insbesondere eine gute Adhäsion zu den Substraten und eine hohe Kohäsion (innere Festigkeit in der Klebstoffschicht).

Darüber hinaus sind die Polymerdispersionen stabil, auch bei geringem Emulgatorgehalt und insbesondere auch ohne Mitverwendung von Vinylestern, z. B. Vinylacetat (VAc).

### Beispiele

### I. Herstellung der Dispersionen:

In einem Polymeristionsreaktor werden 116 g Wasser und 0,05 Gewichtsteile, bezogen auf 100 Gew.-Teile Monomere einer Styroldispersionen (Polymerisat) mit einem gewichtsmittleren Teilchendurchmesser von 30 nm, auf 85°C unter Rühren erwärmt und dann unter weiterem Rühren 10 Gew.-% von Zulauf 2 zugegeben.

Nach 5 min. werden Zulauf 1 und der Rest von Zulauf 2 gleichzeitig gestartet und mit konstanter Zulaufgeschwindigkeit in 270 min dosiert. Nach dem Ende des Zulaufs 1 wird noch 30 min bei 85°C gerührt. Bei dieser Temperatur werden unter Rühren zeitgleich 0,16 Gew.-Teile, bezogen auf 100 Gew.-Teile Monomere einer 10 %igen Lösung von tert.-Butylhydroperoxid in Wasser sowie 0,16 Gew.-Teile, bezogen auf 100 Gew.-Teile Monomere einer wäßrigen Lösung von Natriumdisulfit-Aceton Addukt zudosiert. Die Dispersion wurde sodann auf Raumtemperatur abgekühlt und mit einer 15 %igen wäßrigen NaOH auf pH=7 neutralisiert.

Der Feststoffgehalt der Dispersion ist auf 55 - 60 % eingestellt.

Folgende Abkürzungen wurden verwendet:
- BA: n-Butylacrylat
- EHA: 2-Ethylhexylacrylat
- MMA: Methylmetacrylat
- S: Styrol
- MA: Methylacrylat
- AS: Acrylsäure
- VAc: Vinylacetat
- Disponil FES77: 30%ige wäßrige Lösung des Natriumsalzes des Sschwefelsäurehalbesters von mit 30 Ethyloxideinheiten ethoxiliertem C12-C14-Alkylrestes (Formel II)
- Dowfax 2A1: 45%ige wäßrige Lösung des Natriumsalzes des mit einem C12-C14-Alkylrest und zwei Sulfonylresten derivatisierten Diphyenlethers (s. Formel I)
- Lutensol T082: 20%ige wäßrige Lösung des mit 8 Ethyloxideinheiten ethoxilierten C₁₂-C₁₄-Alkylrestes (Formel III)
- NaPS: Natriumperoxodisulfat

Zulauf 1 = Emulsionszulauf
   242 g Wasser
   Gesamtmenge an Monomere: 560 g
   Art der Monomere siehe Tabellen
   Art und Menge der Emulgatoren siehe Tabellen, die Mengen sind dort in Gewichtsteilen angegeben.
Zulauf 2 = Initiatorzulauf:
   Menge NaPS (7 Gew.-%ig in Wasser) siehe Tabellen

### II. Prüfmethoden

### a) Herstellung der Prüfstreifen

Die Dispersion wird mit einer Rakel in dünner Schicht auf ein silikonisiertes Papier aufgetragen und 3 min bei 90°C getrocknet. Die Spalthöhe der Rakel wird dabei so gewählt, daß sich für den getrockneten Klebstoffe eine Auftragsmenge von 19-21 g/m² ergibt. Auf den getrockneten Klebstoff wird handelsübliche PE-Folie (Stärke 100 µ) vorbehandelt, aufgelegt und mit einem Handroller fest angerollt. Das so hergestellte Folienlaminat wird in Streifen von 0,5 inch bzw. 1,0 inch und von 2 cm Breite geschnitten. Diese Streifen werden vor der Prüfung mindestens 24h im Normklima gelagert.

### b) Prüfung der Scherfestigkeit als Maß für die Kohäsion (in Anlehnung an FINAT FTM 7)

Nach Abziehen des silikonisierten Papiers wird der Folienprüfstreifen so auf den Rand eines Prüfblechs aus Edelstahl verklebt, daß sich eine Verklebungsfläche von 0,5 inch x 0,5 inch (Folienstreifen) ergibt. 20 Minuten nach dem Verkleben wird am überstehenden Ende beider Papieretiketten des Papierstreifens ein 1000 g-Gewicht befestigt und das Prüfblech senkrecht aufgehängt. Umgebungsbedingungen: 23°C, 50 % relative Luftfeuchtigkeit. Als Scherfestigkeit wird die Zeit bis zum Versagen der Verklebung unter Einfluß des Gewichts als Mittelwert aus den Ergebnissen von drei Prüfkörpern in Stunden angegeben.

### c) Prüfung der Schälfestigkeit als Maß für die Adhäsion (in Anlehnung an FINAT FTM 1)

Nach Abziehen des silikonisierten Papiers wird ein 2 cm breiter Folienprüfstreifen auf ein Prüfblech aus Edelstahl verklebt. Umgebungsbedingungen: 23°C, 50 % relative Luftfeuchtigkeit. 1 Minute nach der Verklebung wird der Streifen mit Hilfe einer Zugprüfmaschine in einem Winkel von 180°C mit einer Geschwindigkeit von 300 mm/min abgezogen. Als Schälfestigkeit wird die dafür im Mittel erforderliche Kraft in N/2cm als Mittelwert aus den Ergebnissen von drei Prüfkörpern angegeben. Zusätzlich wird das Bruchbild beurteilt.

### d) Entmischung, Stabilität der Emulsion

Es wurde die Entmischung von 100 ml Emulsion nach 1 Stunde gemessen. die angegebenen Werte beziehen sich auf die gebildete Menge an klarer Flüssigkeit, die sich von der ursprünglichen Emulsion abgetrennt hat.

**Tabelle 1**

| Monomere: 56BA, 28EHA, 15MMA, 1AS; Emulgatoren: 1 Disponil FES77, 0,2 Dowfax 2A1 (Änderungen gegenüber dieser Zusammensetzung sind in der Tabelle angegeben) | | | | | |
|---|---|---|---|---|---|
| Nr. | zusätzlich 0.5 Emulgator Lutensol TO 82 | mit 10 VAc, dafür 5 BA und 5 MMA weniger | Schälfestigkeit 300 mm/min [N/2,5 cm] sofort Stahl | Kohäsion [h] Stahl | Emulsionsentmischung in [%] |
| 1 | nein | nein | 4.5 | 41 | 2 |
| 2 | ja | nein | 5.1 | 36 | 0 |
| 3 | nein | ja | 5.7 | 36 | 0 |

**Tabelle 2**

| Monomere: 60EHA, 22BA, 15MA, 2S,1AS; Emulgatoren: 1 Disponil FES77, 0,2 Dowfax 2A1 (Änderungen sind in der Tabelle angegeben) | | | | | |
|---|---|---|---|---|---|
| Nr. | zusätzlich Emulgator Lutensol TO 82 | mit 10 VAc, dafür 10 MA weniger | Schälfestigkeit 300 mm/min [N/2,5 cm] sofort Stahl | Kohäsion [h] Stahl | Emulsionsentmischung in [%] |
| 4 | nein | nein | 5.3 | 41 | 2 |
| 5 | ja | nein | 5.8 | 38 | 0 |
| 6 | nein | ja | 5.9 | 36 | 0 |

[b] Es wurde die Entmischung von 100 ml Emulsion nach 1 Stunde gemessen. Die angegebenen Werte beziehen sich auf die gebildete Menge an klarer Flüssigkeit, die sich von der ursprünglichen Emulsion abgetrennt hat.

Versuche 2 und 5 sind erfindungsgemäß. Versuch 3 und 6 zeigen, dass im Falle der Erfindung genauso gute Ergebnisse erzielt werden, wie sonst mit 10 % Vinylacetat als Comonomeren.

## Patentansprüche

1. Emulgatorgemisch, enthaltend einen Emulgator I der Formel 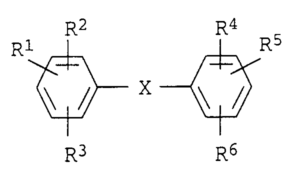 worin X für 0, S, CH₂, NH oder NR⁷, ein oder zwei der Reste R¹ bis R⁶ für eine Gruppe SO₃^{⊖} K^{⊕} und die übrigen Reste R¹ bis R⁶ für H oder eine C₁-C₁₈-Alkylgruppe, R⁷ für eine C₁-C₁₈-Alkylgruppe und K für ein Gegenkation stehen
einen Emulgator II der Formel
R⁸-O-(Z-O)ₙ-SO₃^{⊖}K^{⊕}
worin die Variablen folgende Bedeutung haben:
R⁸: C₁-C₁₈-Alkyl
Z: CH₂―CH₂ oder 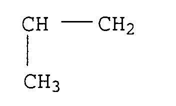
n: eine ganze Zahl von 1 bis 50
K: ein Kation
und einen nichtionischen Emulgator III.

2. Emulgatorgemisch, gemäß Anspruch 1, **dadurch gekennzeichnet, dass** der nichtionische Emulgator zu mindestens 20 Gew.-% aus Alkoxygruppen besteht.

3. Emulgatorgemisch gemäß Anspruch 1 oder 2, **dadurch gekennzeichnet, dass** der nichtionische Emulgator keine aromatischen Gruppen enthält.

4. Emulgatorgemisch gemäß einem der Ansprüche 1 bis 3, **dadurch gekennzeichnet, dass** es sich beim nichtionischen Emulgator III um einen solchen der Formel
R⁸-O-(Z-O)ₙ-H
handelt, worin die Variablen die vorstehende Bedeutung haben.

5. Emulgatorgemisch gemäß einem der Ansprüche 1 bis 4, **dadurch gekennzeichnet, dass** der Gewichtsanteil der einzelnen Emulgatoren I, II und III mindestens 5 Gew.-%, bezogen auf die Gewichtssumme dieser drei Emulgatoren beträgt.

6. Verwendung des Emulgatorgemisches gemäß einem der Ansprüche 1 bis 5 als Emulgator bei der Emulsionspolymerisation.

7. Wäßrige Polymerdispersion, erhältlich unter Verwendung eines Emulgatorgemisches gemäß Anspruch 6.

8. Wäßrige Polymerdispersion gemäß Anspruch 7, **dadurch gekennzeichnet, dass** das Polymer zu mindestens 40 Gew.-% aus sogenannten Hauptmonomeren, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren aufgebaut ist.

9. Wäßrige Polymerdispersionen gemäß einem der Ansprüche 7 oder 8, **dadurch gekennzeichnet, daß** das Polymer keine Vinylester enthält.

10. Verwendung der Polymerdispersion gemäß einem der Ansprüche 7 bis 9 als Bindemittel in Klebstoffen, insbesondere Haftklebstoffen.

11. Selbstklebende Artikel, erhältlich unter Verwendung einer Polymerdispersion gemäß einem der Ansprüche 7 bis 9 als Klebstoff.
